# EUROPEAN PATENT APPLICATION

(11) **EP 2 302 514 A1**
(43) Date of publication of application: **30.03.2011**
(21) Application number: 09174842.6
(22) Date of filing: 03.11.2009
(51) Int. Cl.: G06F 9/445

(54) **Operating system capable of capturing and installing required device drivers**

(30) Priority: 04.09.2009 TW 098129849
(71) Applicant: Giga-Byte Technology Co., Ltd., Taipei 231 (TW)
(72) Inventor: Lin, Shih-Jay, Hsin Tien, Taipei County 231 (TW)
(74) Representative: Schwerbrock, Florian

(57) **Abstract**

An operating system including a host module and a periphery device is disclosed. The host module includes a plurality of processing units and a first lookup table. The periphery device includes an executive program and a plurality of drivers. The executive program reads the first lookup table and installs a portion of drivers required by the processing units according to the reading result.

## Description

### CROSS REFERENCE TO RELATED APPLICATIONS

This Application claims priority of Taiwan Patent Application No. 098129849, filed on Sep. 4, 2009, the entirety of which is incorporated by reference herein.

### BACKGROUND OF THE INVENTION

### Field of the Invention

The invention relates to an operating system, and more particularly to an operating system capable of capturing and installing required drivers.

### Description of the Related Art

In current computer systems, various devices, such as a display card, a sound card and a motherboard, require drivers. When a driver is installed, a corresponding device can be normally operated by a computer system. Generally, the drivers are recorded on a CD-R, wherein different devices require different drivers. Thus, for multiple devices in a computer system, a user must sequentially install all corresponding drivers via their respective CD-RS.

Accordingly, for every new or updated device, a user must install a new driver via a new respective CD-R. Thus, due to the conventional driver installation method, users must spend a lot of time, manually installing device drivers via CD-Rs. Additionally, device manufacturers must manufacture a new CD-R for every device offered, which increases costs for devices.

### BRIEF SUMMARY OF THE INVENTION

Operating systems are provided. An exemplary embodiment of an operating system comprises a host module and a periphery device. The host module comprises a plurality of processing units and a first lookup table. The periphery device comprises an executive program and a plurality of drivers. The executive program reads the first lookup table and installs a portion of drivers required by the processing units, according to the reading result.

An operating method for a host module comprising at least one processing unit is provided. An exemplary embodiment of an operating method is described in the following. A first lookup table is produced according to the processing unit. The first lookup table comprises at least one installation number. The first lookup table is read. At least one first driver among a plurality of drivers required by the processing unit is installed according to the reading result.

A detailed description is given in the following embodiments with reference to the accompanying drawings.

### BRIEF DESCRIPTION OF THE DRAWINGS

The invention can be more fully understood by referring to the following detailed description and examples with references made to the accompanying drawings, wherein:

FIG. 1 is a schematic diagram of an exemplary embodiment of an operating system according to the invention;

FIG. 2a is a schematic diagram of an exemplary embodiment of a lookup table according to the invention;

FIG. 2b is a schematic diagram of an exemplary embodiment of another lookup table according to the invention;

FIG. 3a is a flowchart of an exemplary embodiment of an operating method according to the invention; and

FIG. 3b is a flowchart of another exemplary embodiment of an operating method according to the invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

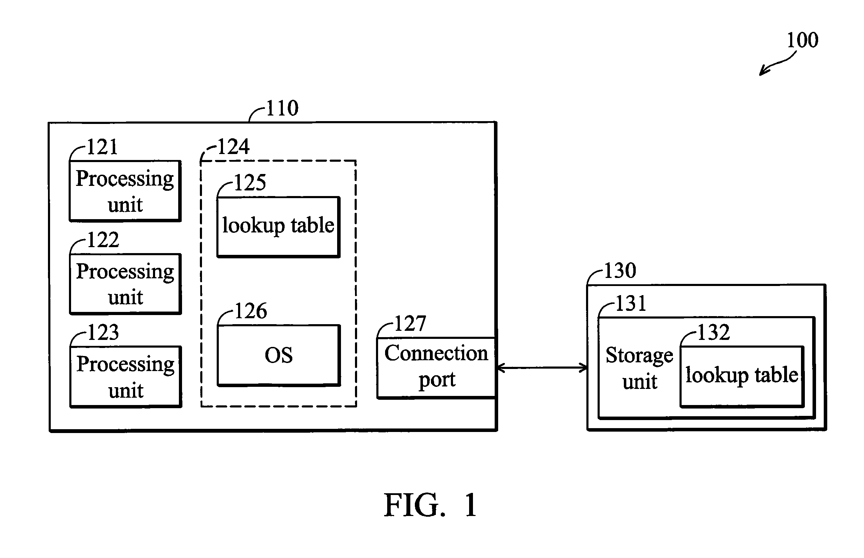

FIG. 1 is a schematic diagram of an exemplary embodiment of an operating system according to the invention. The operating system 100 comprises a host module 110 and a periphery device 130. The host module 110 can be any device, which is normally operated after installing a corresponding driver. The invention does not limit the type of host module 110. In this embodiment, the host device 110 is a host device of a computer system. Additionally, the invention does not limit the type of the periphery device 130. In one embodiment, the periphery device 130 is a flash drive or a player, such as a DVD player. The player comprises an optical disk. In other embodiments, the periphery device 130 can be any device, which comprises at least one driver.

The host module 110 comprises processing units 121-123, a storage unit 124, and a connection port 127. In this embodiment, the host module 110 comprises three processing units, but the disclosure is not limited thereto. In other embodiments, the host module 110 comprises at least four processing units.

In this embodiment, the drivers corresponding to the processing units 121∼123 are required to be installed into the host module 110 such that the processing units 121∼123 can be normally operated. The invention does not limit the type of processing units 121∼123. In one embodiment, the processing units can be a display card, a sound card, a network card, and a motherboard, but the disclosure is not limited thereto.

The storage unit 124 comprises a lookup table 125 and an operating system (OS) 126. In one embodiment, the lookup table 125 and the OS 126 are stored in the same memory or stored in different memories. In another embodiment, the storage unit 124 further stores a basic input/output system (BIOS). The BIOS and the lookup table 125 are stored in the same memory. For example, the BIOS is produced and simultaneously, the lookup table 125 is produced according to the type of the processing units 121∼123.

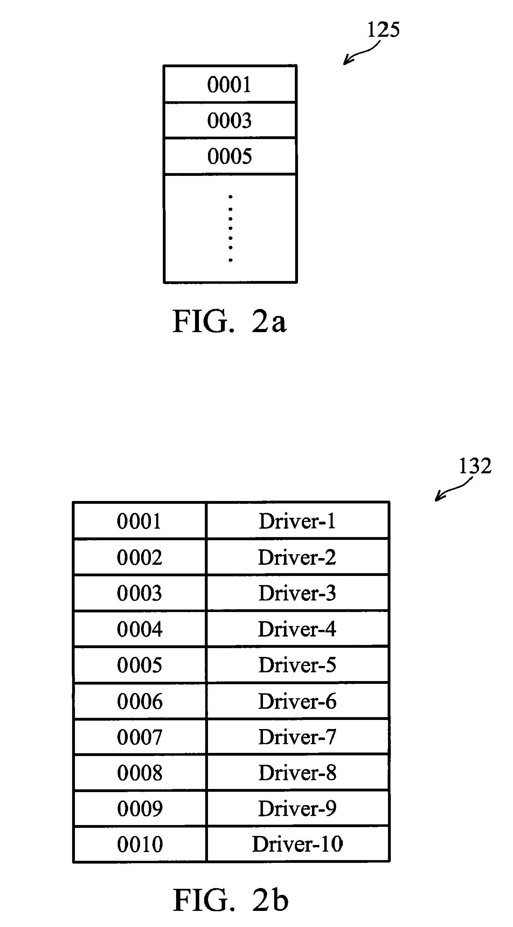

The lookup table 125 comprises various installation numbers. Each of the installation numbers corresponds to at least one processing unit. In this embodiment, each of the installation numbers corresponds to one processing unit. FIG. 2a is a schematic diagram of an exemplary embodiment of the lookup table 125 according to the invention. The lookup table 125 comprises installation numbers 0001, 0003, and 0005. In this embodiment, the installation number 0001 corresponds to the processing unit 121. The installation number 0003 corresponds to the processing unit 122. The installation number 0005 corresponds to the processing unit 123.

When the connection port 127 of the host module 110 is coupled to the periphery device 130, the periphery device 130 communicates with the host module 110. In this embodiment, the connection port 127 is a universal serial bus (USB) interface, but the disclosure is not limited thereto.

The periphery device 130 comprises storage unit 131, such as a flash memory, a CD-R, or a DVD device. The storage unit 131 stores an executive program, a plurality of drivers and a lookup table 132. The filename extension of the executive program is .INF, such as autorun.inf. When the periphery device 130 is coupled to the connection port 127, the executive program of the periphery device 130 reads the lookup table 125 of the host module 110. Then, the executive program captures and installs a portion of drivers of the periphery device 130. When the portion of drivers of the periphery device 130 is installed, the processing units 121∼123 can be normally operated.

FIG. 2b is a schematic diagram of an exemplary embodiment of the lookup table 132 according to the invention. The lookup table 132 records the driving numbers 0001∼0010 and their corresponding relationships to the drivers. In this embodiment, one driving number corresponds to one driver. For example, the driving number 0001 corresponds to the driver-1. The driving number 0003 corresponds to the driver-3. In other embodiments, each driving number can correspond to at least two drivers.

When the periphery device 130 is coupled to the host module 110 via the connection port 127, the OS 126 actives the executive program of the periphery device 130. The executive program reads the lookup table 125 of the host module 110 and installs the corresponding drivers according to the reading result. In this embodiment, the amount of the driving numbers of the lookup table 132 is more than the amount of the installation numbers of the lookup table 125.

For example, after the lookup table 125 of the host module 110 has been read, it is obtained that the host module 110 requires three drivers. The three drivers correspond to the installation numbers 0001, 0003, and 0005, respectively. Thus, the executive program of the periphery device 130 captures and installs the corresponding drivers from the lookup table 132 according to the reading result.

In one embodiment, the executive program reads the lookup table 125 to obtain the installation numbers (e.g. 0001, 0003, and 0005). The executive program compares the installation numbers (0001, 0003, and 0005) and the driving numbers 0001∼0010 of the lookup table 132. When a first installation number (e.g. 0001) among the installation numbers (0001, 0003, and 0005) is equal to a first driving number (e.g. 0001) among the driving numbers (0001-0010) of the lookup table 132, the executive program installs the driver-1 corresponding to the first driving number (e.g. 0001).

In one embodiment, the executive program stored in the periphery device 130 installs the portion of drivers (e.g. the driver-1, the driver-3, and the driver-5) required by the processing units 121∼123 according to the sequence of the recorded installation numbers (e.g. 0001, 0003, and 0005).

In this embodiment, the lookup table 125 of the host module 110 corresponds to the processing units 121∼123. Thus, the portion of drivers required by the processing units 121∼123 can be captured and installed according to the recorded installation number stored in the lookup table 125. The required drivers are among the drivers stored in the periphery device 130.

Taking a CD-R as an example, assuming the CD-R has various drivers. A user can install the different drivers for the different processing units via a single CD-R. Thus, the time for installation is reduced and the installation procedure is simplified.

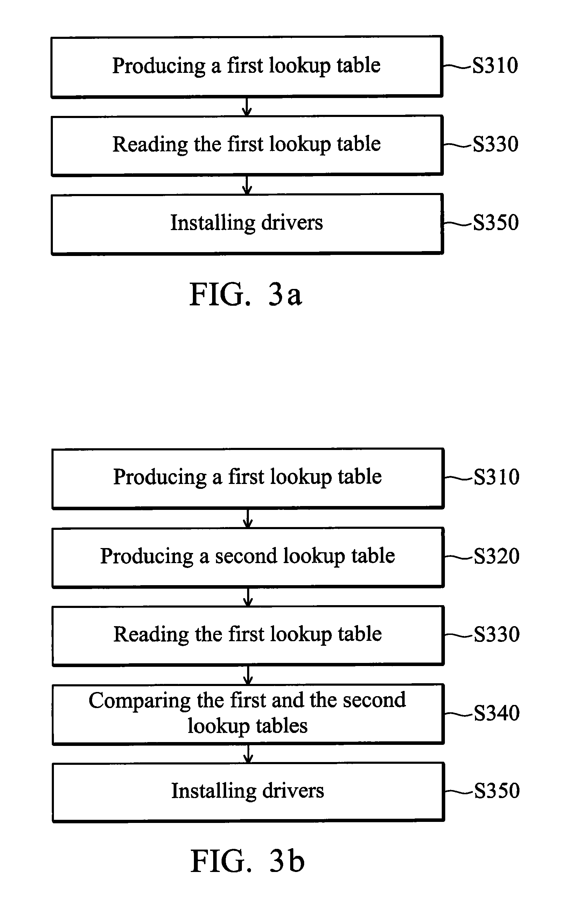

FIG. 3a is a flowchart of an exemplary embodiment of an operating method according to the invention. The operating method is applied to a host module. The host module comprises at least one processing unit. Taking FIG. 1 as an example, the host module can comprise three processing units (e.g. 121∼123).

A first lookup table is produced according to the processing unit (step S310). The first lookup table can be predetermined or can be produced by the host module. In one embodiment, the host module has a detection function for detecting the type of the processing unit. The host module produces the first lookup table according to the detected result. In another embodiment, the first lookup table is predetermined by a design engineer. The design engineer predetermines the first lookup table according to the type of the processing unit of the host module.

The first lookup table can be stored in a storage unit of the host module. In one embodiment, the storage unit further stores a BIOS. In this embodiment, the first lookup table stored in the storage unit comprises at least one installation numbers. Taking FIG. 2a as an example, the first lookup table of the host module comprises three installation numbers (e.g. 0001, 0003, and 0005). In this embodiment, each installation number corresponds to a single processing unit. The invention does not limit the corresponding relationship between the installation numbers and the processing units (e.g. 121∼123). In another embodiment, one installation number corresponds to at least two processing units.

The first lookup table is read (step S330). Since the first lookup table corresponds to the processing unit, when the first lookup table of the host module is read, the type of the processing unit can be obtained.

At least one first driver among the various drivers is installed according to the reading result (step S350). When the first driver is installed, a corresponding processing unit can be normally operated. In this embodiment, various drivers are stored in a storage unit and then the corresponding drivers are captured and installed according to the reading result of the step S330.

FIG. 3b is a flowchart of another exemplary embodiment of an operating method according to the invention. FIG. 3b is similar to FIG. 3a except for the addition of steps S320 and S340. To speedily obtain the first driver required by the processing unit, a second lookup table is produced (step S320). The second lookup table records a corresponding relationship between various driving numbers and drivers. In this embodiment, each driving number only corresponds to one driver (as shown in FIG. 2b).

After reading the first lookup table (step S330), the reading result is compared with the driving numbers of the second lookup table (step S340). When the reading result (e.g. 0001, 0003, and 0005 of FIG. 2a) of the step S330 is equal to one driving number among the driving numbers (e.g. 0001∼0010 of FIG. 2b), the portion of drivers corresponding to the driving number are installed (step S350). For example, since the installation number 0001 shown in FIG. 2a is equal to the driving number 0001 shown in FIG. 2b and the driving number 0001 corresponds to the driver-1, the driver-1 is installed.

Since the first lookup table relates to the processing unit, when the first lookup table is read, the type of the processing unit is obtained. When the type of the processing unit is obtained, the portion of the drivers required by the processing unit can be captured and installed. In this embodiment, various drivers are stored in the same memory, and a user may install a required driver via a single storage unit.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. An operating system, comprising:
a host module comprising a plurality of processing units and a first lookup table; and
a periphery device comprising an executive program and a plurality of drivers, wherein the executive program reads the first lookup table and installs a portion of drivers required by the plurality of processing units according to the reading result.

2. The operating system as claimed in claim 1, wherein the first lookup table comprises a plurality of installation numbers, the periphery device comprises a second lookup table, and the second lookup table records a plurality of driving numbers and a corresponding relationship between the driving numbers and the drivers.

3. The operating system as claimed in claim 2, wherein one of the driving numbers corresponds to one of the drivers.

4. The operating system as claimed in claim 2, wherein the executive program compares the installation numbers and the driving numbers, and when a first installation number among the installation numbers equals to a first driving number among the driving number, the executive program installs the driver corresponding to the first driving number.

5. The operating system as claimed in claim 4, wherein an amount of the driving numbers is more than an amount of the installation numbers.

6. The operating system as claimed in claim 4, wherein the executive program installs the portion of drivers according to a sequence of the installation numbers.

7. The operating system as claimed in claim 1, wherein the host module comprises a connection port and an operating system (OS), and when the periphery device is coupled to the connection port, the OS executes the executive program.

8. The operating system as claimed in claim 1, wherein the host module comprises a storage unit storing the first lookup table.

9. The operating system as claimed in claim 8, wherein the storage unit comprises a basic input/output system (BIOS).

10. The operating system as claimed in claim 1, wherein the periphery device is a flash drive.

11. The operating system as claimed in claim 1, wherein the periphery device comprises:
an optical disk storing the executive program and the drivers; and
a player reading data stored in the optical disk.

12. An operating method for a host module comprising at least one processing unit, comprising:
producing a first lookup table according to the processing unit, wherein the first lookup table comprises at least one installation number;
reading the first lookup table; and
installing at least one first driver among a plurality of drivers, required by the processing unit, according to the reading result.

13. The operating method as claimed in claim 12, further comprising:
producing a second lookup table recording a corresponding relationship between the drivers and a plurality of driving numbers;
comparing the installation numbers and the driving numbers; and
when an installation number equals to a first driving number among the driving numbers, the first driver corresponding to the first driving numbers is installed.

14. The operating method as claimed in claim 13, wherein one of the driving numbers corresponds to one of the drivers.

15. The operating method as claimed in claim 12, wherein the first lookup table is stored in a storage unit of the host module.

16. The operating method as claimed in claim 15, wherein a basic input/output system is stored in the storage unit.

## Amended claims

### Amended claims in accordance with Rule 137(2) EPC.

**1.** An operating system, comprising:
a host module comprising a plurality of processing units and a first lookup table; and
a periphery device comprising an executive program and a plurality of drivers, wherein the executive program reads the first lookup table and installs a portion of drivers required by the plurality of processing units according to the reading result ;
**characterized by** wherein the first lookup table comprises a plurality of installation numbers, the periphery device comprises a second lookup table, and the second lookup table records a plurality of driving numbers and a corresponding relationship between the driving numbers and the drivers.

**2.** The operating system as claimed in claim 1, wherein one of the driving numbers corresponds to one of the drivers.

**3.** The operating system as claimed in claim 1, wherein the executive program compares the installation numbers and the driving numbers, and when a first installation number among the installation numbers equals to a first driving number among the driving number, the executive program installs the driver corresponding to the first driving number.

**4.** The operating system as claimed in claim 3, wherein an amount of the driving numbers is more than an amount of the installation numbers.

**5.** The operating system as claimed in claim 3, wherein the executive program installs the portion of drivers according to a sequence of the installation numbers.

**6.** The operating system as claimed in claim 1, wherein the host module comprises a connection port and an operating system (OS), and when the periphery device is coupled to the connection port, the OS executes the executive program.

**7.** The operating system as claimed in claim 1, wherein the host module comprises a storage unit storing the first lookup table.

**8.** The operating system as claimed in claim 7, wherein the storage unit comprises a basic input/output system (BIOS).

**9.** The operating system as claimed in claim 1, wherein the periphery device is a flash drive.

**10.** The operating system as claimed in claim 1, wherein the periphery device comprises:
an optical disk storing the executive program and the drivers; and
a player reading data stored in the optical disk.

**11.** An operating method for a host module comprising at least one processing unit, comprising:
producing a first lookup table according to the processing unit, wherein the first lookup table comprises at least one installation number;
reading the first lookup table; and
installing at least one first driver among a plurality of drivers of a periphery device, required by the processing unit, according to the reading result.

**12.** The operating method as claimed in claim 11, further comprising:
producing a second lookup table recording a corresponding relationship between the drivers and a plurality of driving numbers;
comparing the installation numbers and the driving numbers; and
when an installation number equals to a first driving number among the driving numbers, the first driver corresponding to the first driving numbers is installed.

**13.** The operating method as claimed in claim 12, wherein one of the driving numbers corresponds to one of the drivers.

**14.** The operating method as claimed in claim 11, wherein the first lookup table is stored in a storage unit of the host module.

**15.** The operating method as claimed in claim 14, wherein a basic input/output system is stored in the storage unit.
